# EUROPEAN PATENT APPLICATION

(11) **EP 3 251 812 A1**
(43) Date of publication of application: **06.12.2017**
(21) Application number: 16186059.8
(22) Date of filing: 26.08.2016
(51) Int. Cl.: B29C 44/34, B29K 105/04

(54) **METHODS AND SYSTEMS FOR CONTINUOUS SATURATION OF MATERIAL, SUCH AS POLYMER FILMS**

(71) Applicant: Dart Container Corporation, Mason, MI 48854 (US)
(72) Inventor: WAGGONER, Mike, Seattle, WA Washington 98115 (US)
(74) Representative: Sessford, Russell

(57) **Abstract**

A method for saturating a thermoplastic polymer material (12) includes continuously moving the polymer material through a pressurized pressure vessel (22). To do this, the method includes sealing the pressure vessel with a series of dynamic seals (20A) that allows the polymer material to continuously move through the pressure vessel while maintaining the pressure inside the pressure vessel.

## Description

### FIELD OF THE DISCLOSURE

Saturation of plastic is typically achieved by placing the plastic in a high pressure gas environment (inside a pressure vessel) for an amount of time so that the plastic can absorb some of the gas. The system and method disclosed herein allows continuous saturation of plastic, which can be, for example, a polymer or polymeric material, by placing a series of dynamic seals at each end of a pressure vessel. Plastic polymer material enters the pressure vessel via the system of seals, and exits the pressure vessel saturated with gas via a system of seals.

### BACKGROUND

Solid-state microcellular processing is a well-known art involving a two-stage batch process. In the first stage (absorption), a solid polymer is saturated with high pressure inert gas (e.g., CO2) in a pressure vessel until a desired gas concentration level is achieved throughout the polymer matrix. Once the gas-polymer mixture is removed from the pressure vessel into ambient environment (desorption), a supersaturated specimen is produced that is thermodynamically unstable due to the excessive diffusion of gas into the polymer. In the second stage (foaming), the gas-polymer mixture is heated in a hot water bath or some other heating medium (non-limiting examples of which include hot air, steam, infrared radiation, etc.) at a temperature close to the glass transition temperature (Tg) of the gas-polymer mixture in order to induce microcellular bubble nucleation and growth.

Saturation of polymer rolls requires placement of an interleaving layer between layers of polymer, to allow gas to enter the surface of the polymer evenly. The addition of this layer is an added process step, and the removal of the interleavement is yet another process step.

Repeated opening and closing of pressure vessels wastes large amounts of high pressure gas, and also creates pauses in plastic processing. A roll that is removed from a pressure vessel begins to lose gas immediately. Gas diffuses out into the atmosphere from the exterior of the roll first and the interior of the roll last. Hence, there may be difficulty achieving consistent foaming behavior throughout the roll, particularly in polymers that lose gas quickly.

U.S. Patent No. 5,158,986 discloses a method of passing an extruded thermoplastic material from a gas-saturation chamber to a foaming chamber via a time-controlled system of rollers. Dynamic seals are stationed between the chambers to allow passage of the thermoplastic sheet while preserving the environmental conditions of each chamber. To date, however, there is no engineering solution for manufacturing a dynamic seal that can operate at pressures required for practicing the art referenced in this current patent.

### BRIEF SUMMARY

In one aspect, illustrative embodiments in accordance with the present disclosure relate to a method of saturating a polymeric material with pressurized gas in a pressure vessel. The method comprises continuously passing a solid polymeric material through a first set of cascading seals at an inlet to the pressure chamber, exposing the solid polymeric material passing through the pressure vessel to pressurized inert gas to form a saturated solid polymeric material, and continuously passing the saturated solid polymeric material through a second set of cascading seals at an outlet to the pressure chamber.

In another aspect, illustrative embodiments in accordance with the present disclosure relate to a system for saturating a solid polymeric material with gas. The system comprises a pressure vessel defining an interior and having an inlet and an outlet fluidly coupled to the interior. The pressure vessel further comprises a pump fluidly coupled to the interior to supply pressurized gas to the interior, a first set of cascading seals fluidly sealing the inlet, and a second set of cascading seals fluidly sealing the outlet.

An aspect provides a method of saturating a polymeric material with pressurized gas in a pressure vessel, the method comprising: continuously passing a solid polymeric material through a first set of cascading seals at an inlet to the pressure chamber; exposing the solid polymeric material passing through the pressure vessel to pressurized inert gas to form a saturated solid polymeric material; and continuously passing the saturated solid polymeric material through a second set of cascading seals at an outlet to the pressure chamber.

The solid polymeric material may comprise at least one of a sheet, rod, or fiber.

The solid polymeric material may comprise a sheet.

Passing the solid polymeric material through the first set of cascading seals may comprise sequentially increasing the pressure at each of the seals in the first set of cascading seals.

Passing the solid polymeric material through the second set of cascading seals may comprise sequentially decreasing the pressure at each of the seals in the second set of cascading seals.

The pressure differential across each seal in at least one of the first or second set of seals may be equal.

The pressure differential across each seal in at least one of the first or second set of seals may not be equal.

The pressurized inert gas may be carbon dioxide.

The pressurized gas may be 500 psig.

The solid polymeric material may be at least one of fed from a roll as it passes into the inlet or may be taken up on a roll after it passes from the outlet.

Another aspect provides a system for saturating a solid polymeric material with gas, the system comprising: a pressure vessel defining an interior and having an inlet and an outlet fluidly coupled to the interior; a pump fluidly coupled to the interior to supply pressurized gas to the interior; a first set of cascading seals fluidly sealing the inlet; and a second set of cascading seals fluidly sealing the outlet.

The system may comprise at least one of a feed roll at the inlet and a take up roll at the outlet.

At least one of the first or second sets of cascading seals may comprise a series of dynamic seals.

Each of the seals in at least one of the first or second sets of seals may maintain the same pressure differential.

Each of the seals in at least one of the first or second sets of seals may maintain a different pressure differential.

At least one of the first or second set of cascading seals may maintain a 500 psig pressure in the interior.

The first and second set of cascading seals may be the same.

At least one of the first or second set of cascading seals may define spaces between seals and the pressure in each space may be separately maintained.

The system may further comprise at least one of an oven, thermoformer or an uptake machine.

The number of seals in at least one of the first or second sets of seals may be determined by a maximum pressure differential allowable across each of the seals.

### BRIEF DESCRIPTION OF THE DRAWINGS

Embodiments are described, by way of example only, with reference to the accompanying drawings, in which:
FIG. 1 is a schematic view of a series of dynamic seals that can be included in a polymer saturation system of FIG. 2 according to an embodiment of the present disclosure; and
FIG. 2 is a schematic view of a polymer saturation system according to an embodiment of the present disclosure.

### DETAILED DESCRIPTION

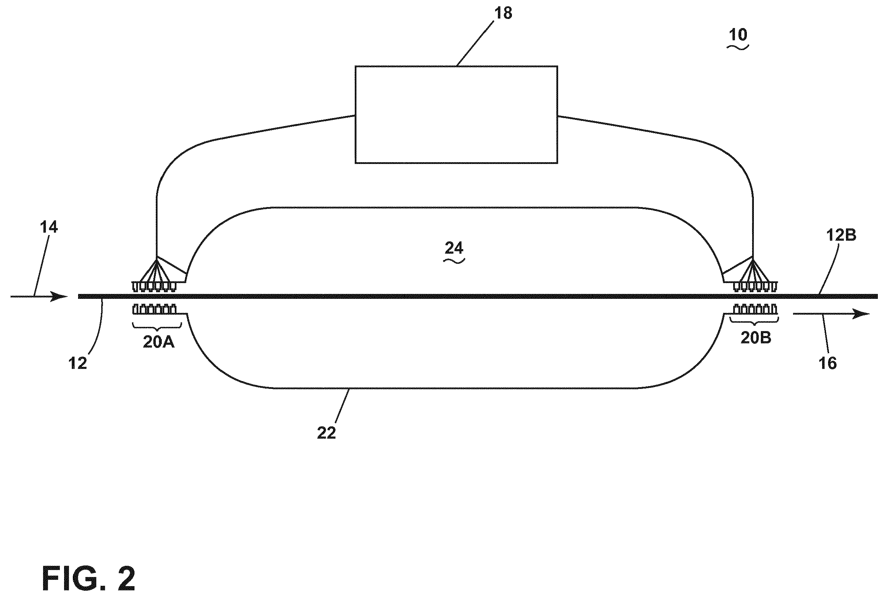

Figure 2 is a schematic illustration showing a polymer saturation system 10 incorporating the cascading seals 20A, 20B. A polymer or polymeric material 12 enters the system 10, more specifically entering an interior 24 of a pressure vessel 22, at one end (from the left side of the drawing), illustrated by arrow 14, and exits as a saturated polymer material 12B at the other end (to the right of the drawing), illustrated by arrow 16. Pressure in each section of the system 10 may be maintained by a pressure regulation system 18. This pressure regulation system 18 could either be, by way of non-limiting example, an external gas source that adds high pressure gas to the system (while excess gas pressure is vented), or an active pump system that both pressurizes and depressurizes one or more sections of the system 10.

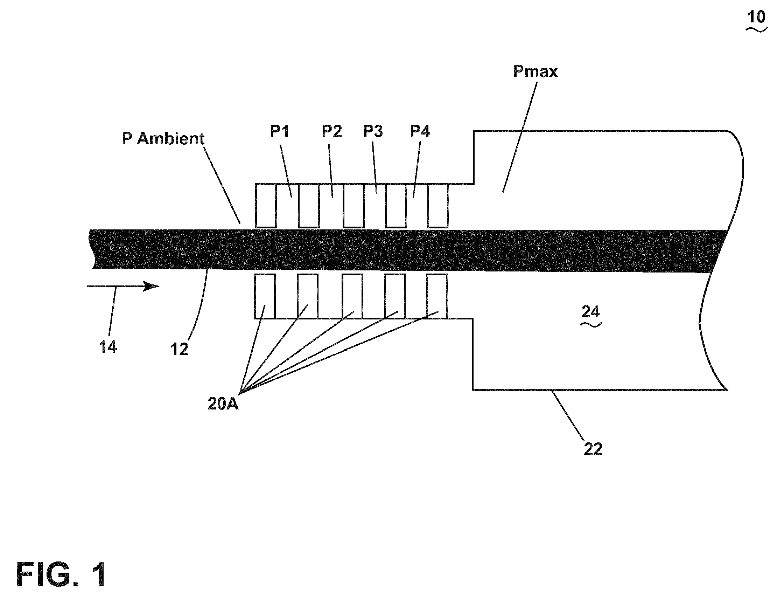

Figure 1 shows a schematic illustration of a series of dynamic seals 20A (cascading seals) and the pressure differential across each seal 20A as a portion of total pressure inside the interior 24 of the pressure vessel 22. Polymer material 12 enters the series of dynamic seals 20A (from the left side of the illustration, as illustrated by arrow 14), and then exits the dynamic seals to enter into the interior 24 of the pressure vessel 22. Pressures P1, P2, P3, and P4 are each a fraction of the total difference in pressure between P ambient and Pmax, and are maintained at their required pressure P1, P2, P3 and P4, respectively, by a pressure regulation system 18 (FIG. 2), which can be, in non-limiting example, an external system of pumps or other source of high pressure gas. For example, in a pressure vessel 22 containing 500 psig, each seal 20A might be used to maintain a pressure differential of 100 psi. P1 would equal 100 psig, P2 would equal 200 psig, P3 would equal 300 psig, P4 would equal 400 psig and Pmax would equal 500 psig. In other embodiments, the total number of seals 20A included in the series of dynamic seals 20A may be more or less than five. In addition, the pressure differential across each seal 20A may not be equal. For example, in order to reduce the amount of gas that escapes into the environment, it may be desirable to maintain P1 at a low level, such as 5 psig, and to maintain the P2 at a higher level, such as 50 psig. The total number of seals 20A required could also be determined by the maximum pressure differential allowable across each seal 20A. A similar system of seals 20B (FIG. 2) may be used on the exit end.

A method for continuous processing of a polymer material 12, non-limiting examples of which can include polymer sheets, rods, fibers, or any continuous thermoplastic part, includes using a pressure vessel 22 having cascading seals 20A, 20B on each end to maintain substantial pressure inside the interior 24 of the pressure vessel 22 while the polymer material 12 moves through the interior 24 of the pressure vessel 22. The cascading seals 20A, 20B, which allow the plastic to enter a high pressure environment, include a series of dynamic seals 20A, 20B, each operating at a differential pressure which is only a fraction of the total pressure (Pmax) in the interior 24 of the pressure vessel 22. The saturation system 10 could be placed in series after a roll of plastic polymer material 12 or after an extruder whereby the plastic polymer material is taken up by the saturation system 10 as according to the schematics in Figure 2. The saturation system 10 can also be placed before any plastic polymer material processing equipment or machinery, including, by way of non-limiting example, an air oven, thermoformer, and material uptake machine, that may be used to process or store the saturated polymer material 12B.

To the extent not already described, the different features and structures of the various embodiments can be used in combination with each other as desired. That one feature may not be illustrated in all of the embodiments is not meant to be construed that it cannot be, but is done for brevity of description. Thus, the various features of the different embodiments can be mixed and matched as desired to form new embodiments, whether or not the new embodiments are expressly described.

While the present disclosure has been specifically described in connection with certain specific embodiments thereof, it is to be understood that this is by way of illustration and not of limitation. Reasonable variation and modification are possible within the scope of the forgoing disclosure and drawings without departing from the spirit of the present disclosure which is defined in the appended claims.

When used in this specification and claims, the terms "comprises" and "comprising" and variations thereof mean that the specified features, steps or integers are included. The terms are not to be interpreted to exclude the presence of other features, steps or components.

## Claims

1. A method of saturating a polymeric material with pressurized gas in a pressure vessel, the method comprising:
continuously passing a solid polymeric material through a first set of cascading seals at an inlet to the pressure chamber;
exposing the solid polymeric material passing through the pressure vessel to pressurized inert gas to form a saturated solid polymeric material; and
continuously passing the saturated solid polymeric material through a second set of cascading seals at an outlet to the pressure chamber.

2. The method of claim 1, wherein the solid polymeric material comprises at least one of a sheet, rod, or fiber.

3. The method of claim 2, wherein the solid polymeric material comprises a sheet.

4. The method of any preceding claim, wherein passing the solid polymeric material through the first set of cascading seals comprises sequentially increasing the pressure at each of the seals in the first set of cascading seals.

5. The method of claim 4 wherein passing the solid polymeric material through the second set of cascading seals comprises sequentially decreasing the pressure at each of the seals in the second set of cascading seals.

6. The method of any preceding claim, wherein the pressure differential across each seal in at least one of the first or second set of seals is equal.

7. The method of any of claims 1 to 5, wherein the pressure differential across each seal in at least one of the first or second set of seals is not equal.

8. The method of any preceding claim, wherein:
the pressurized inert gas is carbon dioxide; AND/OR
the pressurized gas is 500 psig; AND/OR
the solid polymeric material is at least one of fed from a roll as it passes into the inlet or is taken up on a roll after it passes from the outlet.

9. A system for saturating a solid polymeric material with gas, the system comprising:
a pressure vessel defining an interior and having an inlet and an outlet fluidly coupled to the interior;
a pump fluidly coupled to the interior to supply pressurized gas to the interior;
a first set of cascading seals fluidly sealing the inlet; and
a second set of cascading seals fluidly sealing the outlet.

10. The system of claim 9, comprising at least one of a feed roll at the inlet and a take up roll at the outlet.

11. The system of claim 9 or 10, wherein at least one of the first or second sets of cascading seals comprises a series of dynamic seals.

12. The system of any of claims 9 to 11, wherein each of the seals in at least one of the first or second sets of seals maintain the same pressure differential.

13. The system of any of claims 9 to 11, wherein each of the seals in at least one of the first or second sets of seals maintain a different pressure differential.

14. The system of any of claims 9 to 13, wherein at least one of the first or second set of cascading seals maintains a 500 psig pressure in the interior.

15. The system of any of claims 9 to 14:
wherein the first and second set of cascading seals are the same; AND/OR
wherein at least one of the first or second set of cascading seals define spaces between seals and the pressure in each space is separately maintained; AND/OR
further comprising at least one of an oven, thermoformer or an uptake machine; AND/OR
wherein the number of seals in at least one of the first or second sets of seals is determined by a maximum pressure differential allowable across each of the seals.
